# EUROPEAN PATENT SPECIFICATION

(11) **EP 3 327 376 B1**
(45) Date of publication and mention of the grant of the patent: **11.05.2022**
(21) Application number: 17203334.2
(22) Date of filing: 23.11.2017
(51) Int. Cl.: F25B 43/02, F04C 29/02, F25B 43/00, B01D 46/00

(54) **OIL SEPARATOR FOR SEPARATING A REFRIGERANT FLUID FROM OIL**
ÖLABSCHEIDER ZUR TRENNUNG EINES KÄLTEMITTELS AUS ÖL
SÉPARATEUR D'HUILE DESTINÉ À SÉPARER UN FLUIDE FRIGORIGÈNE À PARTIR D'HUILE

(30) Priority: 23.11.2016 IT 201600118596
(43) Date of publication of application: 30.05.2018
(73) Proprietor: Daikin applied Europe S.p.A., 00040 Ariccia (Roma) (IT)
(72) Inventor: DE SIATI, Paolo, 00071 Pomezia (Roma) (IT); ONORATI, Giulio, 00041 Albano Laziale (Roma) (IT); CARAPELLOTTI, Giammatteo, 04012 Cisterna Di Latina (Latina) (IT); COSTANZA, Marco, 04011 Aprilia (Latina) (IT)
(74) Representative: Conti, Marco

(56) References cited:
- US-A- 5 242 475
- US-A1- 2003 014 951
- US-A1- 2007 028 571
- US-A1- 2012 125 040

## Description

This invention relates to an oil separator, for separating a refrigerant fluid from oil in a temperature conditioning system.

Temperature conditioning systems, such as chillers or heat pumps, use a circulation of refrigerant fluid.

Typically, the refrigerant fluid is circulated by a compressor, through a condenser and an then through an evaporator.

The compressor requires lubrication; to this end, in a known solution, lubricant oil is mixed to the refrigerant fluid (gas) which passes through the compressor, so that the mixture of oil and refrigerant gas provides for the lubrication.

However, the presence of oil would affect the performance of the evaporator, whereby the refrigerant fluid must be depurated from the oil, prior to entering the evaporator and, preferably, prior to entering the condenser.

In this connection, the use of an oil separator, for separating a refrigerant fluid from oil in a temperature conditioning system is known, for example from patent documents US5704215A, US2005022551A1.

US5704215A discloses a solution where the oil separator is integrated in the condenser.

US2005022551 A1 regards a solution where the oil separator is external to the condenser; here, the flow of oil and refrigerant fluid mixture is passed through one or two filtering elements.

Other examples of oil separators are described in patent documents US5242475A, US2012/125040A1 and US2007/028571 A1 each of which discloses an oil separator according to the preamble of claim 1.

However, the efficiency of these known systems in the separation of the oil from the refrigerant fluid is relatively low.

Scope of the present invention is to overcome at least one of the aforementioned drawbacks.

This scope is achieved by the oil separator according to the appended claims.

According to an embodiment of the present invention there is provided a temperature conditioning system. The temperature conditioning system may for example be a chiller or a heat pump.

The temperature conditioning system has a refrigerant circuit, where a refrigerant fluid is circulated.

The (refrigerant circuit of the) temperature conditioning system comprises a compressor, for compressing the refrigerant fluid.

The refrigerant fluid inside the compressor is mixed with oil, for lubricating the compressor, whereby the compressor discharges a mixture formed by the refrigerant fluid (gas) and the oil.

In this connection, the oil separator has the function to separate the oil from said mixture discharged from the compressor.

The (refrigerant circuit of the) conditioning system further comprises a condenser, for condensing the refrigerant fluid, an expansion valve, for expanding the refrigerant fluid, and an evaporator, for evaporating the refrigerant fluid. The compressor, the oil separator, the condenser, the expansion valve and the evaporator are connected in this order.

The present invention regards both the oil separator (per se) and the temperature conditioning system including the oil separator.

The oil separator comprises a casing. The (casing of the) oil separator has an inlet, for receiving the mixture of oil and refrigerant fluid, and an outlet, through which the refrigerant fluid is discharged from the (casing of the) oil separator.

The refrigerant fluid discharged through the outlet corresponds to the mixture received at the inlet, but depurated from the oil (that is, the amount of oil present at the outlet is significantly lower than the amount of oil present at the inlet).

In an embodiment, the oil extracted in the oil separator is gathered and recirculated to the compressor.

The oil separator has an internal volume. The mixture passes from the inlet to the outlet through the internal volume of the casing.

The oil separator comprises a filtering structure, for separating the oil from the refrigerant fluid. The (filtering structure of the) oil separator includes at least a main filtering unit. The (main) filtering unit occupies (defines) a filtering area, for intercepting the flow of said mixture to be filtered (separated).

Preferably, the (main) filtering unit is configured for mechanically separate the oil from the refrigerant fluid. The (main) filtering unit may be for example a demister or a mesh pad.

In an embodiment, the (main) filtering unit has a flat configuration, that is, it elongates along a surface; in this connection, it may be seen as a filtering layer or filtering wall; in an embodiment, it has a planar configuration, that is, it elongates along a plane.

In an embodiment, where the oil separator is integrated with the condenser, the volume internal to the casing is divided into a first and a second volume; the oil separator is housed in the first volume and the condenser is housed in the second volume. Otherwise, if the oil separator is separate from (not integrated with) the condenser, the whole volume inside the casing belongs to the oil separator.

The (main) filtering unit is arranged inside the (first volume of the) casing.

The (main) filtering unit is arranged inside the casing for intercepting at least a portion of the flow of mixture, flowing from the inlet to the outlet. In an embodiment, the main filtering unit is configured for intercepting the entire flow of mixture flowing through the casing (from the inlet to the outlet).

According to the present invention, the (filtering structure of the) oil separator comprises at least an additional filtering unit, further to the main filtering unit. The description (one or more of its features) reported above for the main filtering unit may apply also to the additional filtering unit.

According to an embodiment, said at least an additional filtering unit is arranged in series with respect to the main filtering unit; in this way, at least a first and a second filtering stage is provided, whereby the mixture flow passes through the first stage and then (the same flow) passes through the second stage. In this case, preferably, the filtering unit positioned upstream has a mesh which is wider, compared to the mesh of the filtering unit positioned downstream (which is relatively narrower).

In an embodiment, the filtering area of the main filtering unit is larger than the filtering area of the at least one additional filtering unit. In a possible embodiment, the ratio between the filtering areas of the main filtering unit and of the at least one additional filtering unit is at least (or greater than) 2, or at least (or greater than) 5, or at least (or greater than) 8.

The presence of the main filtering unit and said at least one additional filtering unit with respective filtering areas of different size helps to improve the recovery efficiency of the oil. In fact, the Applicant has discovered that the presence of a first and a second filtering unit having different filtering areas operatively active to process the gas-oil mixture in two successive stages improves the oil separation efficiency at different speeds of the mixture flow.

According to the present invention, the main filtering unit (the main filtering area) is positioned downstream said at least one additional filtering unit (said at least one additional filtering area), with respect to a path of said mixture flow from the inlet to the outlet.

In a possible embodiment, the (filtering structure of the) oil separator comprises a first and a second additional filtering unit, further to the main filtering unit. In an embodiment, the first and the second additional filtering units are arranged parallel to one another, to intercept a first and a second portion, respectively, of the mixture flow received at the inlet. In an embodiment, the set of the first and a second additional filtering units defines the first filtering stage, and the main filtering unit defines the second filtering stage; in this connection, the main filtering unit is configured to receive (to intercept) both the first and the second portion of the flow, passed through the first and second additional filtering unit, respectively.

According to an embodiment, the (first volume internal to the) casing is elongate in a longitudinal direction. In particular, the casing is elongate along a longitudinal axis. Said longitudinal axis is oriented according to said longitudinal direction, so that any other axis oriented longitudinally (that is, along the longitudinal direction) would be parallel to the longitudinal axis of the casing.

In an embodiment, the main filtering unit is oriented in the longitudinal direction. In a possible embodiment, the main filtering unit elongates along a (flat or curved) surface, that is oriented according to the longitudinal direction.

The longitudinal orientation of the main filtering unit helps to improve the recovery efficiency of the oil, yet keeping the size of the casing small. However, it is also envisaged, in a possible embodiment, that the main filtering unit (and the possible additional filtering unit or units) can be oriented transversally (that is, perpendicularly or substantially perpendicularly) with respect to the longitudinal direction.

The inlet and the outlet may be arranged according to various, different configurations, with respect to the longitudinal direction.

In one embodiment, the additional filtering unit (or units) is oriented transversally to the main filtering unit; in this case, preferably, the main filtering unit has a larger filtering area (compared to the additional filtering unit) and is oriented longitudinally.

In a possible embodiment, in the first filtering stage, the mixture flows in a first direction (preferably the longitudinal direction), and in the second filtering stage, the mixture flows in a second direction which is different (substantially perpendicular) to the first direction (preferably the transversal direction).

In a possible embodiment, the (filtering structure of the) oil separator comprises the main filtering unit oriented longitudinally, and the first and the second additional filtering units oriented transversally; the first and the second additional filtering units are spaced apart longitudinally one from the other, to a first distance. In an embodiment, the main filtering unit extends longitudinally to a length that is equal or substantially equal to said first distance; in this case, preferably, the first and the second additional filtering units are positioned at respective sides of the main filtering unit, wherein said sides are positioned opposite to one another in the longitudinal direction.

In a possible embodiment, the main filtering unit has a rectangular (or substantially rectangular) shape, with two major sides and two minor sides. In a possible embodiment, the two major sides are oriented longitudinally and the two minor sides are oriented transversally. In an embodiment, each one of the first and the second additional filtering units has (a layer having) a respective side positioned at a corresponding minor side of the main filtering unit; preferably, for each one of the first and the second additional filtering units, said respective side has the same length as the corresponding minor side of the main filtering unit adjacent (or connected) thereto.

In a possible embodiment, the (first) internal volume defined by the casing is divided into a number of zones arranged in succession with respect to the mixture flow path from the inlet to the outlet; in an embodiment, said zones are in fluid communication one with the other only (or prevalently) through the filtering units, so that the mixture flow, in order to pass from one zone to the successive one, is forced to pass through a corresponding one of the filtering units.

In an embodiment, the (first) internal volume defined by the casing is divided into (in other words, it defines internally):
- a first zone, wherein the inlet is open to this first zone;
- a second zone, separate from the first zone through at least an input barrier structure;
- a third zone, wherein the outlet is open (directly or indirectly) to this third zone; the third zone is separate from the second zone through at least an output barrier structure.

Each of the at least an input barrier structure and the output barrier structure includes a respective filtering unit.

In one embodiment, the at least an input barrier structure includes the at least one additional filtering unit. The at least an output barrier structure includes the main filtering unit.

In one embodiment, the at least one additional filtering unit occupies an area which is smaller than the whole area occupied by said at least an input barrier structure, wherein the remaining portion (area) of the at least an input barrier structure is made of a material that cannot be passed through by the mixture flow.

In one embodiment, a first input barrier structure, including the first additional filtering unit, and a second input barrier structure, including the second additional filtering unit, are provided.

In one embodiment, the first and second input barrier structures are arranged transversally and spaced apart to the first distance.

In one embodiment, the main filtering unit occupies an area which is the same or substantially the same as that occupied by the output barrier structure. In one embodiment, the area occupied by the output barrier structure is delimited in its perimeter by the first and second input barrier structures and by one or more walls defined by the casing (preferably, by a lateral external wall of the casing).

In one of the possible embodiments, the outlet is equally spaced (with respect to the longitudinal direction) between the first and the second input barrier structures. In an alternative embodiment, the outlet is located (with respect to the longitudinal direction) closer to the first input barrier structure (or the first additional filtering structure), than to the second input barrier structures (or second additional filtering structure). This (alternative) embodiment is preferred in a possible embodiment, where the oil separator is integrated with the condenser, and the outlet of the oil separator defines an inlet for the condenser; in this case, a water outlet of the condenser is positioned closer to the first input barrier structure (or first additional filtering structure), than to the second input barrier structure (or second additional filtering structure), and is positioned at an opposite longitudinal end of the casing, with respect to a corresponding water inlet of the selfsame condenser (in this way, inside the condenser, the refrigerant gas flow and the water flow have opposite orientations).

In a possible embodiment, the oil separator comprises a conveying unit, for guiding the mixture flow towards the outlet. In one embodiment, the conveying unit is at a distance from the main filter unit.

In an embodiment, the conveying unit includes a septum or separator or wall; in an embodiment, the conveying unit defines a plurality of apertures through which the mixture flow can (is forced to) pass.

The conveying unit is arranged in the casing between filtering structure and the outlet; in other words, the conveying unit is arranged between the filtering unit defining the last filtering stage (preferably, the main filtering unit) and the outlet; in this way, the mixture flow has to pass through the (apertures of the) conveying unit, in its path downstream the filtering structure towards the outlet.

The presence of the conveying unit helps to improve the performance of the oil separator, because it renders the speed distribution of the mixture flow particularly homogeneous through the filtering structure (particularly the main filtering unit).

In an embodiment, the conveying unit defines a diffusing barrier for the mixture flow, in such a way that the mixture flow can go across the conveying unit only through the apertures of the selfsame conveying unit. In one embodiment, the conveying unit (diffusing barrier) is arranged between the output barrier structure and the outlet. In this case, the conveying unit (diffusing barrier) may be seen as defining a fourth zone, positioned downstream the third zone, wherein the outlet is open directly to this fourth zone, and the third zone is in fluid communication with the fourth zone through the conveying unit (diffusing barrier).

In one embodiment, the conveying unit (diffusing barrier) is arranged longitudinally, and faces the main filtering wall (for example, at least part of it may be substantially parallel thereto). In an embodiment, the longitudinal length of the main filtering wall is the same or substantially the same as that of the conveying unit (diffusing barrier). In an embodiment, the area occupied by the main filtering wall is the same or larger than the area occupied by the conveying unit (diffusing barrier); for example, it could be larger in an embodiment where the casing has a tubular shape and the main filtering wall is arranged in an position which is closer to the longitudinal axis, than the conveying unit (diffusing barrier).

According to the invention, the oil separator comprises a duct arranged inside the casing. Said duct has a first end connected to the inlet, to receive the mixture flow. The duct has a second end and a third end, oriented opposite one another along the longitudinal direction, to direct a first and a second portion of said flow with opposite (divergent) orientations (e.g. right and left, or up and down) along the longitudinal directions.

The second zone receives the mixture (through respective first and second additional filtering units) divided into said first and a second flow portions, oriented in opposite (convergent) orientations (along the longitudinal direction).

The volume internal to the duct forms part of the first zone of the casing. In a possible embodiment, the duct is surrounded (at least in part) by the third zone of the casing.

It is observed that the present invention covers also a method for separating oil from a refrigerant fluid (in a temperature conditioning system).

The method comprises a step of conveying a flow of a mixture of oil and refrigerant fluid from an inlet to an outlet. Said mixture flow is conveyed from the inlet to the outlet in a (first) volume; this (first) volume is internal to the casing of the oil separator.

In an embodiment, said (first) volume is elongate in a longitudinal direction.

The method comprises a step of passing said mixture flow through a main filtering area, for separating the oil from the refrigerant fluid.

According to an aspect of the disclosure, the main filtering area is oriented in the same longitudinal direction, along which the volume elongates.

In an embodiment, the condenser is integrated with the oil separator and provides a flow of water (for extracting heat from the refrigerant fluid), oriented in said longitudinal direction, and preferably directed opposite the flow of refrigerant fluid in the second volume of the casing.

According to another aspect of the invention, the method comprises a step of passing said mixture flow through at least one additional filtering area, in sequence to said passing through the main filtering area, so providing a first and a second stage of filtering.

In an embodiment, the step of passing the mixture flow through said at least one additional filtering area occurs prior to the step of passing through the main filtering area, whereby the at least one additional filtering area is used in the first filtering stage and the main filtering area is used in the second filtering stage.

The main filtering area is larger than said at least one additional filtering area. Indeed, in one aspect of the invention, the method includes steps of passing the mixture flow through filtering area of different sized in sequential stages of filtering.

In one embodiment, said at least one additional filtering area is oriented transversally to the main filtering area.

In one embodiment, the method includes a step of dividing the mixture flow into a first and a second flow portion with different directions, and subjecting each of said first and second flow portion through a respective additional filtering area, as the first stage of filtering. In one embodiment, the method includes a step of passing both of said first and second flow portions (which have already passed through the respective additional filtering area) through the main filtering area, in the second stage of filtering. Preferably, the filtering area (or areas) used in the second filtering stage has a thinner mesh, compared to the filtering area (or areas) used in the first filtering stage.

The present invention regards an oil separator; in one embodiment, the oil separator comprises the refrigerant fluid processed therein. The present invention also regards a temperature conditioning system, wherein the refrigerant fluid is circulated. The present disclosure also regards a method for separating oil from a refrigerant fluid (in a temperature conditioning system).

In a possible embodiment (of the oil separator, of the temperature conditioning system, and/or of said method), the refrigerant fluid is a hydrofluoroolefin (HFO). Said hydrofluoroolefin (HFO) may have one or more of the features included in the present disclosure.

The present invention further provides a use of a hydrofluoroolefin (HFO) as refrigerant fluid in an oil separator, in a temperature conditioning system, and/or in a method for separating oil from the refrigerant fluid, wherein said oil separator, said temperature conditioning system and said method may have one or more of the features included in the present invention.

In one embodiment, the first additional filtering unit and the second additional filtering unit are positioned at opposite ends of the main filtering unit, preferably upstream the main filtering unit.

In one embodiment, the oil separator comprises a duct arranged in the casing and having a first end, connected to the inlet, to receive the mixture flow, and a second and a third end, to divide the flow into a first and a second portion of the flow, direct in different (preferably opposite) directions. The second and third end are oriented in a second and a third direction, respectively, which are different one from the other; second and third end can be oriented opposite one another along the longitudinal direction.

In one embodiment, each one of said first and a second additional filtering unit is arranged to receive a respective one of the first and the second portion of said flow from the inlet.

In one embodiment, the outlet is located closer to the first transverse wall, than to the second transverse wall.

This and other features of the invention will become more apparent from the following detailed description of a preferred, non-limiting example embodiment of it, with reference to the accompanying drawings, in which:
- Figure 1 illustrates (schematically) a refrigerant circuit of a temperature conditioning system, according to the present invention;

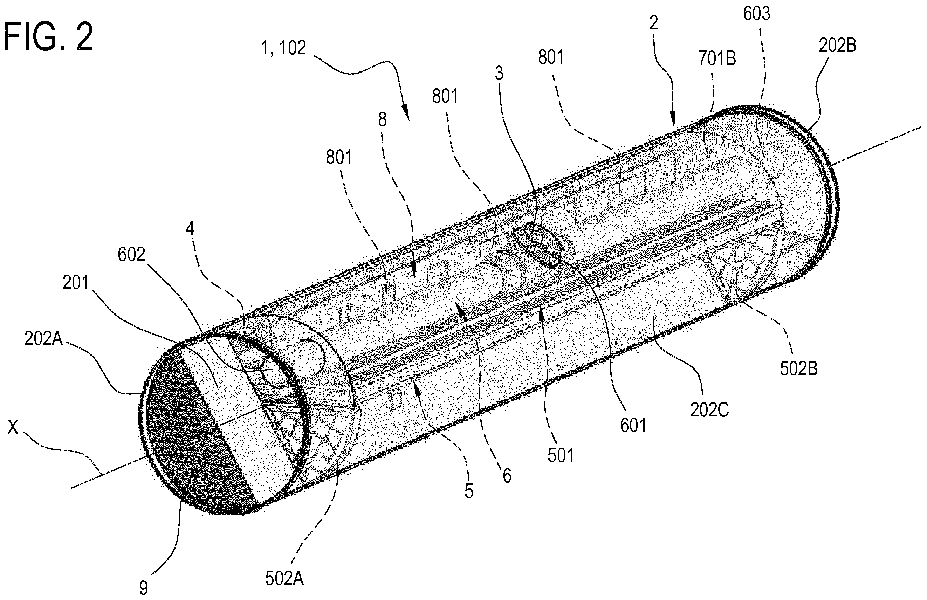

- Figure 2 illustrates an oil separator according to the present disclosure, in perspective view and in transparency;

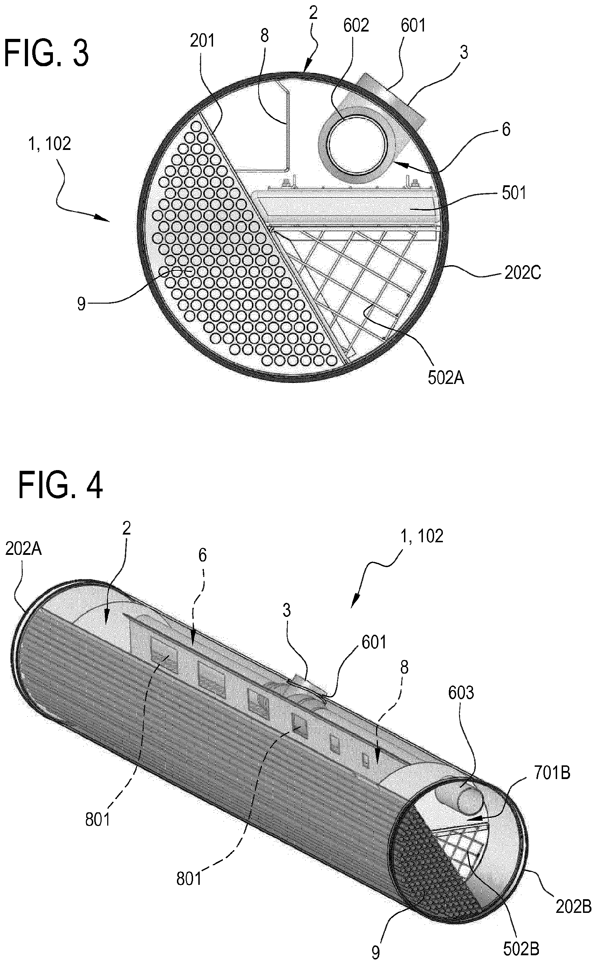

- Figure 3 illustrates the oil separator of figure 2, in lateral view;
- Figure 4 illustrates the oil separator of figure 2, in another perspective view;

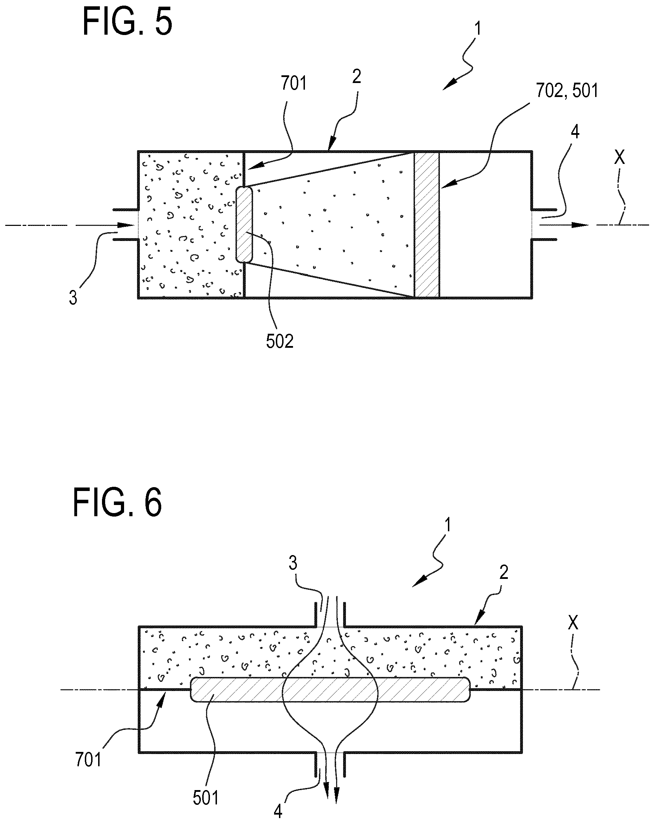

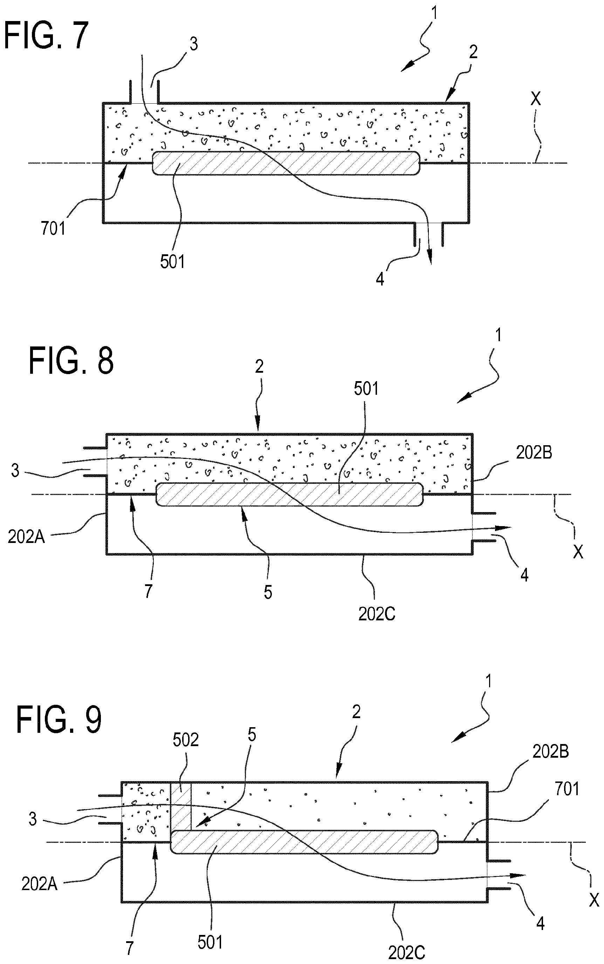

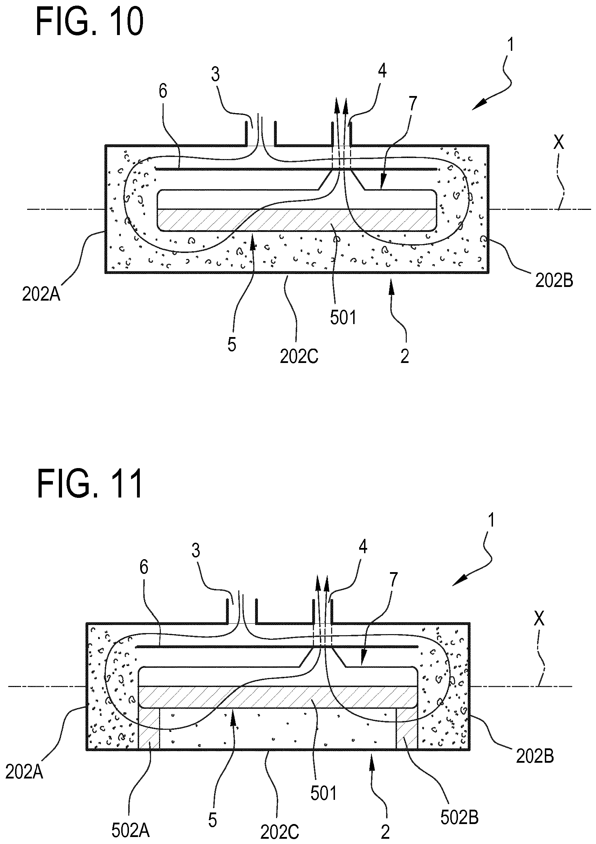

- Figures 5-11 provide a schematic illustrations of the oil separator of the present disclosure, according to respective, possible embodiments.

With reference to the accompanying drawings, the numeral 100 denotes a a refrigerant circuit of a temperature conditioning system, according to the present disclosure.

The refrigerant circuit 100 comprises a compressor 101, for compressing a refrigerant fluid.

The refrigerant circuit 100 comprises an oil separator 1, for separating oil from a mixture formed by oil and the refrigerant fluid (in gas phase). The oil separator 1 receives said mixture from the compressor 101. In one embodiment, the refrigerant circuit 100 comprises a discharge line 106, which connects the compressor 101 to the oil separator 1, whereby the compressor 101 feeds the oil separator 1 with said mixture, through the discharge line 106.

The refrigerant circuit 100 comprises a condenser 102, for condensing the refrigerant fluid, from gas to liquid phase. The condenser 102 receives the refrigerant fluid (gas) from the oil separator 1.

The refrigerant circuit 100 comprises an expansion valve 103, for expanding the refrigerant fluid. The expansion valve 103 receives the refrigerant fluid from the condenser 102.

The refrigerant circuit 100 comprises an evaporator 104 for evaporating the refrigerant fluid. The evaporator 104 receives the refrigerant fluid from the expansion valve 103.

The compressor 101 receives at input the refrigerant fluid from the evaporator 104. Therefore, the refrigerant fluid is circulated in closed loop in the refrigerant circuit 100.

The oil is mixed to the refrigerant fluid at the compressor 101. In an embodiment, the refrigerant circuit 100 comprises an oil conduit 105 for transferring oil (without refrigerant fluid) from the oil separator 1 to the compressor 101. Hence, the oil is circulated in closed loop between the compressor 101 and the oil separator 1; on its way from the compressor 101 to the oil separator 1, the oil is transported within said mixture, together with the refrigerant fluid (gas); on its way from the oil separator 1 to the compressor 101, the oil is transported through the oil conduit 105. Regarding the compressor 101, in one embodiment it is configured to generate an output flow (of said mixture of oil and refrigerant fluid) at at least a first speed and a second speed different from the first speed. In order to generate an output mixture flow at different speeds, the compressor 101 may for example include an inverter connected to an electric motor of the compressor 101; in an alternative example, the compressor 101 may vary the speed of the output mixture flow by mechanical means (e.g. with a slide vanes technology).

Regarding the refrigerant fluid, in one embodiment it includes (preferably it is) hydrofluoroolefin (HFO). For example, HFO-1234yf, HFO-1234ze(E), HFO-1336mzz, HFO-1123, or HFO-1243zf may be used as HFO refrigerant fluid.

However, the refrigerant fluid may be of any other type, as for example a hydro fluoro carbon HFC (refrigerant). In this case, for example, HFC-134a and the like may be used as HFC refrigerant fluid.

Regarding the fluid used as refrigerant gas, it is further observed that a capacity (cooling capacity) per volume (capacity/unit of volume, [kW/m³ /h]) of HFO is smaller (e.g. in [%]) than the capacity per volume (capacity/unit of volume, [kW/m³/h]) of HFC. For example, a capacity per volume of HFO1234ze is 74% of the capacity per volume of HFC-134a. For this reason, in the situation where the oil separator separates the mixture of HFO and oil, the mixture flow (that is, the flow rate of the mixture) is set higher (larger) than in the situation where the oil separator separates the mixture of HFC and oil, in order to provide same or similar cooling capacity.

Therefore, the use of HFO as refrigerant fluid in the oil separator (according to one or more of the embodiments of the present disclosure) permits to achieve a particularly high degree of efficiency of oil separation, without increasing the size of the oil separator.

Regarding the material which can be as "lubricating oil", non limiting examples are Polyvinyl ether (PVE), polyol ester (POE), polyalkylene glycol (PAG), naphthenic mineral oil, alkyl benzene (AB), poly-α-olefin (PAO).

The oil separator 1 has a casing 2.

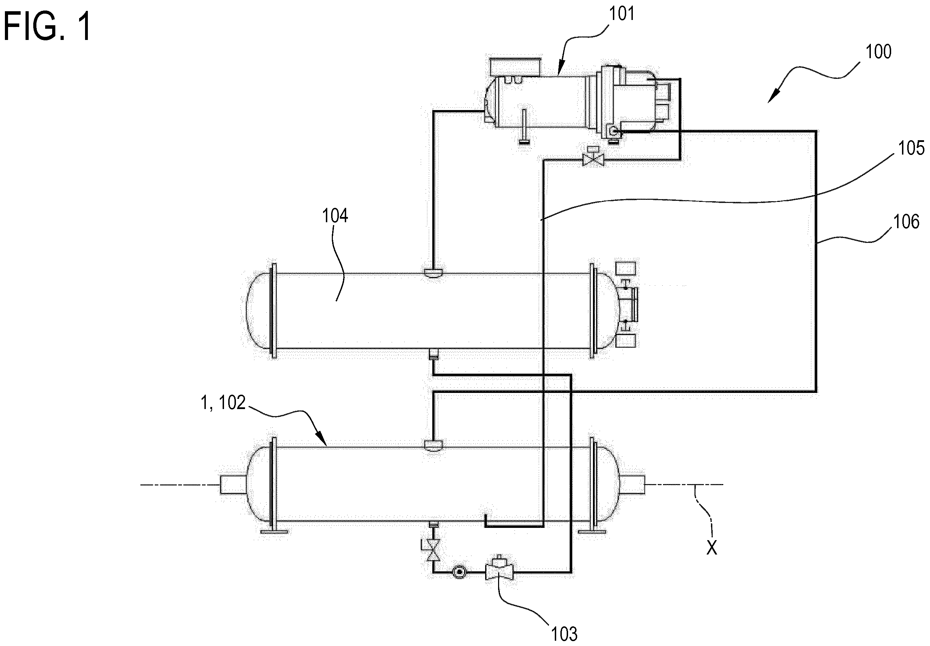

In the embodiment of figure 1, the oil separator 1 and the condenser 102 are integrated. However, the present disclosure is not limited to this feature, and is intended to cover also technical solutions where the oil separator 1 is a separate and distinct component, with respect to the condenser 102.

In the embodiment where the oil separator 1 is integrated with the condenser 102, the casing 2 forms an external shell which is shared by the oil separator 1 and the condenser 102. In this case, the oil separator 1 has a separation wall 201, arranged inside the casing 2 for separating an internal volume defined by the casing 2 into a first volume, occupied by the oil separator 1, and a second volume, occupied by the condenser 102. Alternatively, if the oil separator 1 and the condenser 102 are not integrated, they have respective (distinct) shells, and the whole internal volume (coinciding here with the first volume) of the casing 2 is occupied by the oil separator 1.

Preferably, the oil separator 1 has a shape which is elongate along a longitudinal direction; preferably, the oil separator 1 elongates along a longitudinal axis X. Likewise, preferably the casing 2 elongates in the longitudinal direction; preferably the casing 2 elongates along the longitudinal axis X. Alternatively, the oil separator 1 and its casing 2 may have a compact shape.

When the casing 2 elongates in the longitudinal direction, its transversal cross section may have any shape (for example, it could be rectangular, squared or circular, or elliptic).

In one embodiment, the transversal cross section of the casing 2 is constant or substantially constant, at least for a major part of its longitudinal length.

In one embodiment, the casing 2 has a tubular shape.

In one embodiment, the casing 2 has a first transverse wall 202A and a second transverse 201B wall opposite the first transverse wall 202A in the longitudinal direction. The casing 2 has a lateral wall 202C arranged between said first and second transverse walls 202A, 202B. These first and second transverse walls 202A, 202B and the lateral wall 202C form an external wall 202 for the casing 2.

The oil separator 1 has an inlet 3 and an outlet 4, which are in fluid communication through a path for the mixture of fluid (gas) refrigerator and oil; hence, said mixture flows from the inlet 3 to the outlet 4 along said path.

In one embodiment, the inlet 3 is open to (located at) the lateral wall 202C of the casing. In one embodiment, the inlet 3 is located at the lateral wall 202A in a position intermediate between the first and the second transverse walls 202A, 202B.

The outlet 4 may be opened to (located at) the separation wall 201.

However, the position of the inlet 3 and of the outlet 4 can have a variety of arrangements; for example, they could be positioned at the first and at the second transverse walls 202A, 202B, respectively; or both at the lateral wall 202C; or, the inlet 3 could be positioned at one of the transverse walls 202A, 202B and the outlet 4 at the lateral wall 202C or separation wall 201, or vice versa; furthermore, the inlet 3 and of the outlet 4 may be aligned along a same axis (for example the longitudinal axis X, or a transverse axis intermediate between the first and the second transverse walls 202A, 202B) or they may be (transversally or longitudinally) offset.

The oil separator 1 comprises a filtering structure 5. The filtering structure 5 is positioned inside the casing 2. The filtering structure 5 is arranged in the casing 2 to intercept the mixture flow in its path from the inlet 3 to the outlet 4. The filtering structure 5 is configured for mechanically separating the oil from the refrigerant fluid of the mixture.

The filtering structure 5 comprises one or more filtering units; these units, preferably, have a flat shape; for example, they are wall-shaped. The filtering units are preferably planar (flat), but they may also have a curved geometry. In any case, each filtering unit defines a respective filtering area, that is, the area exposed to the passage of the mixture flow. Each filtering unit also has a thickness, which is smaller than the filtering area. The filtering units may be formed as grids or mash pads.

The filtering structure 5 includes at least a main filtering unit 501. Hence, the oil separator 1 comprises at least the main filtering unit 501.

In at least an embodiment, the (filtering structure 5 of) the oil separator 1 further includes at least an additional filtering unit 502. In an embodiment, the (filtering structure 5 of) the oil separator 1 comprises a first additional filtering unit 502A and a second additional filtering unit 502B.

Preferably, the main filtering unit 501 is oriented longitudinally, that is, the main filtering unit 501 is oriented so as to be parallel or to include the longitudinal axis X; in one embodiment, the main filtering unit 501 is parallel to the longitudinal axis X but spaced apart from it.

The main filtering unit 501 defines a main filtering area; the first and second additional filtering units 502A, 502B define a first and a second filtering area, respectively.

The main filtering area is larger than first and the second filtering areas; for example, it is double or larger than double. The first and the second filtering areas may be of the same size (or of different sizes). Preferably, the first and second additional filtering units 502A, 502B are arranged transversally (substantially orthogonally) to the main filtering unit 501.

In an embodiment, the first and second additional filtering units 502A, 502B are positioned at a first and a second end sides of the main filtering unit 501, at opposite longitudinal ends of the main filtering unit 501. The first and second additional filtering units 502A, 502B may be in contact with the main filtering unit 501.

In one embodiment, the main filtering unit 501 has a pair of major sides, longitudinal, and a pair of minor sides, transversal to the longitudinal direction. One of the major sides is in contact with the lateral wall 202C of the casing 2, the other one of the major sides is in contact with the separation wall 201 (or with the lateral wall 202C of the casing 2). Preferably, all sides of the main filtering unit 501 are straight.

Preferably, the separation wall 201 is oriented longitudinally and extends to the whole longitudinal length of the casing 2; if the transversal cross section of the casing 2 is circular, the separation wall 201 preferably forms a cord, parallel to a diameter; in an embodiment, it is positioned so that the first volume is larger than the second volume.

In one embodiment, each one of the first and second additional filtering units 502A, 502B has: a first side adjacent or connected to a respective minor side of the main filtering unit 501; a second side in contact with a stretch of the lateral wall 202C of the casing 2; a third side in contact with a transversal stretch of the separation wall 201 (or with a corresponding, opposite stretch of the lateral wall 202C of the casing 2).

In one embodiment, the main filtering unit 501, the first and second additional filtering units 502A, 502B, a portion of the lateral wall 202C of the casing 2 and (if present) a portion of the separation wall 201 delimit a closed space, which defines a second zone of the (first) volume internal to the casing 2.

The oil separator 1 comprises a duct 6 (or conduit, or pipe). Said duct 6 is (as least partially) arranged inside the casing 2. The duct 6 has a first end 601 and a second end 602. The a first end 601 of the duct 6 is at the inlet 3 (or forms the inlet 3), to receive the mixture flow. In one embodiment, the first end 601 is directed transversally; preferably, the first end 601 is equally spaced (in the longitudinal direction) from the first and the second additional filtering units 502A, 502B (and/or from the first and the second transversal walls 202A, 202B of the casing 2).

The second end 602 of the duct 6 is directed longitudinally (for example towards the first transversal wall 202A), so that the mixture flow coming from the inlet 3 (or a first portion thereof) is deviated from the transversal to the longitudinal direction (for example towards the first transversal wall 202A).

The duct 6 further includes a third end 603. In one embodiment, the third end 603 of the duct 6 is directed longitudinally (for example towards the second transversal wall 202B), so that the mixture flow coming from the inlet 3 (a second portion thereof) is deviated from the transversal to the longitudinal direction (towards the second transversal wall 202A).

The first, second and third ends 601, 602 and 603 of the duct 6 form openings of the duct 6; in particular, the first end 601 is an inlet for the duct 6, the second and third ends 602 and 603 are outlets for the duct 6.

In an embodiment, the oil separator 1 comprises a barrier system 7, arranged inside the casing 2 for dividing its (first) internal volume into zones. These zones are functional to providing a multiple stage filtering of the mixture. The barrier system 7 comprises one or a plurality of barriers. In one embodiment, the oil separator 1 comprises an input barrier 701, including the main filtering unit 501, and an output barrier 702, which includes the additional filtering unit 502.

In one embodiment, the input barrier 701, in turn, comprises a first input barrier 701A, which includes the first additional filtering unit 502A, and a second input barrier 701B, which includes the second additional filtering unit 502B. Preferably, the first and the second input barriers 701A, 701B are delimited by the lateral wall 202C and by the separation wall 201 (or solely by the lateral wall 202C); each one of them is formed by the respective first or second additional filtering unit 502A, 502B and by a septum which is impermeable to the mixture flow. The first and second input barrier 701A, 701B face (are parallel, at a distance thereto) the first and second transverse walls 202A, 202B, respectively.

The first and the second input barrier 701A, 701B delimit between them, in cooperation with the lateral wall 202C and with the separation wall 201 (or solely with the lateral wall 202C), a third zone of the (first) volume internal to the casing 2; an external surface of the duct 6 also cooperates to delimit the third zone.

A first zone of the (first) volume internal to the casing 2 is delimited by:
- each one of the first and the second input barrier 701A, 701B, with a portion (facing thereto) of the first and second transverse walls 202A, 202B, respectively, and with a corresponding stretch of the lateral wall 202C and of the separation wall 201 (or solely of the lateral wall 202C);
- an internal surface of the duct 6.

Said first, second and third zone are in succession, one downstream the other, with respect of the path of the mixture in its flow from the inlet 3 to the outlet 4.

The second and third zones are elongated longitudinally, and spaced apart transversally, separated by (preferably only by) the main filtering unit 501.

The first zone includes two regions located at opposite longitudinal ends of the first volume, and a connection region defined internally by the duct 6. In an embodiment (in possible combination with all other embodiments of this disclosure), the oil separator comprises a conveying unit 8.

The conveying unit 8 is shaped as a flat element, such as a wall. The conveying unit 8 is positioned downstream the filtering structure 5 and upstream the outlet 4; indeed, the conveying unit 8 is located inside the (first) volume of the casing 2.

The conveying unit 8 defines a plurality of apertures 801 (through holes), to allow the refrigerant gas (separated from the oil) to pass through.

In an embodiment, the outlet 4 is located in the separation wall 201, between the first and the second input barriers 701A, 701B. Preferably, the outlet 4 is located adjacent to the first input barrier 701A (more in general, it is closer to the first input barrier 701A than to the second input barrier 701B).

In one embodiment, the apertures 801 of the conveying unit 8 have different size; preferably, the size of the apertures 801 of the conveying unit 8 increase from the first input barrier 701A to the second input barrier 701B.

The conveying unit defines a diffusing barrier for the mixture flow, positioned in said third zone; in this connection, the conveying unit 8 (diffusing barrier) may be seen as defining a fourth zone (of the first volume inside the casing 2), positioned downstream the third zone, wherein the outlet 4 is in direct communication with the inlet 3, whilst the third zone communicates with the fourth zone through the conveying unit (diffusing barrier).

In an embodiment, the second volume of the casing 2 contains water pipes 9 of the condenser 102.

The present invention renders available also a method for separating oil from a refrigerant fluid in a temperature conditioning system.

The method according to the invention as defined in claim 11 comprises a step of conveying a flow of the oil and refrigerant mixture from the inlet 3 to the outlet 4 (of the casing 2). The mixture is conveyed through the (first) volume (defined inside the casing 2), along a predetermined path.

In (at least) an embodiment, the (first) volume is elongate in the longitudinal direction (along the longitudinal axis X).

During its flow along said path, the mixture passes through a filtering structure 5, to separate the oil from the refrigerant fluid (gas).

During its flow along said path, the mixture passes through at least a main filtering area (of the main filtering structure 501).

Preferably, said main filtering area is oriented longitudinally.

When it passes through the main filtering area, the speed of the mixture flow has a component directed transversally (orthogonally) to the main filtering area; preferably, it also has a component directed longitudinally (that is, parallel to the main filtering area).

In an embodiment, the method comprises a step of passing the mixture through at least an additional filtering area.

Preferably, the additional filtering area is smaller than the main filtering area.

Preferably, the mixture flow passes through said at least an additional filtering area prior to passing thought the main filtering area. In this case, the passage through the additional filtering area provides a first filtering stage, sequentially followed by a second filtering stage, which is provided by the passage through the main filtering area.

In one embodiment, the mixture flow received at the inlet 3 is divided into a first and a second flow portions, each one if said first and a second flow portions being passed through a respective one of a first and second additional filtering area. In this case, the first filtering stage includes the simultaneous passage of the first and a second flow portions through respective additional filter units 502A, 502B, prior to passing through the main filter unit 501.

The mixture flow is bifurcated, so that the first and second flow portions are directed with opposite orientations, preferably along the longitudinal direction.

Preferably, the first and the second additional filtering areas are oriented transversally to the longitudinal direction.

Said main filtering area is larger than the area of any transversal cross section of said first volume.

In one embodiment, in its path from the inlet 3 to the outlet 4, the mixture flows through (at least) a first, a second and a third zone of the (first) internal volume, in sequence.

One of the zones (the second zone, in one embodiment) is delimited by at least the main filtering area and by the first and second additional filtering areas. Preferably, the first and second additional filtering areas are orthogonal to the main filtering area; in one embodiment, the first and the second additional filtering areas are connected to the main filtering area. Preferably, the mixture flows inside said (second) zone with a longitudinal speed; the mixture enters in said (second) zone by flowing inside from opposite sides of the zone (spaced apart longitudinally), through the first and second additional filtering areas arranged transversally.

Preferably, the mixture flows inside said (second) zone with a (prevailingly) longitudinal speed; the mixture enters in said (second) zone by flowing inside from opposite sides of the zone (spaced apart longitudinally), through the first and second additional filtering areas arranged transversally.

Preferably, the mixture flows outside said (second) zone with (prevailingly) transversal speed; the mixture exits from said (second) zone by flowing out through the main filtering area arranged longitudinally (and preferably extending to the whole distance which separates longitudinally the first and second additional filtering areas).

In one embodiment, the method comprises a step of guiding the flow of the refrigerant fluid downstream the filtering structure 5, to the outlet 4. This guiding step is accomplished, in one embodiment, through a conveying unit 8, which is arranged between the filtering structure 5 (preferably, the main filtering unit 501) and the outlet 4. In this position, the conveying unit 8 defines (forms) a fourth zone (of the first volume) positioned downstream the third zone, along the flow path form the inlet 3 to the outlet 4.

In one embodiment, the conveying unit 8 is provided with a plurality of apertures 801 (through holes), through which the refrigerant fluid is forced to pass.

Preferably, the conveying unit 8 extends to the whole length of the main filtering unit 501, facing thereto (spaced transversally therefrom).

In one embodiment, the outlet 4 is located at an end (according to the longitudinal direction) of the fourth zone. The apertures 801 are provided in the whole longitudinal length of the conveying unit, forming a succession of apertures 801 spaced longitudinally one from the other; preferably, the size of the apertures 801 of said succession increases in the direction away from the outlet 4.

The present disclosure also provides a method for temperature conditioning, through a refrigerant circuit 100.

This method provides a step of circulating a refrigerant fluid in a loop formed by the compressor 101, the oil separator 1, the condenser 102, the expansion valve 103 and the evaporator 104, in this order.

In a possible embodiment, the method provides a step of varying the speed of the mixture of oil and refrigerant fluid discharged by the compressor 101.

Preferably, the method provides a step of gathering the oil separated in the oil separator 1 and of conveying it to the compressor 101, to provide a recirculation of the oil between the oil separator 1 and the compressor 101.

In one embodiment, the method has a step of providing a casing 2, wherein the oil separator 1 and the condenser 102 are integrated and both are housed inside the casing 2.

## Claims

1. An oil separator (1) for separating a refrigerant fluid from oil in a temperature conditioning system, wherein the oil separator (1) comprises:
- a casing (2) having an inlet (3), for receiving a mixture of oil and refrigerant fluid, and an outlet (4), so that a flow of said mixture can pass from the inlet (3) to the outlet (4), the casing (2) being elongate in a longitudinal direction;
- a main filtering unit (501), arranged inside the casing (2) for intercepting said mixture, and configured for separating the oil from the refrigerant fluid;
- at least an additional filtering unit (502), arranged in series with respect to the main filtering unit (501), to intercept said flow of the mixture,
wherein the main filtering unit (501) occupies a filtering area which is larger than the area occupied by said at least one additional filtering unit (502) and is positioned downstream said at least one additional filtering unit (502), with respect to a path of said mixture flow from the inlet (3) to the outlet (4),
wherein the oil separator (1) is **characterized by** comprising a duct (6), the duct (6) being arranged inside the casing (2) and having a first end (601), connected to the inlet (3), to receive the mixture flow, and a second and a third end (602, 603), oriented opposite one another along the longitudinal direction, to direct a first and a second portion of said flow towards a first and second transverse wall (202A, 202B) of the casing (2), respectively.

2. The oil separator (1) of claim 1, wherein the main filtering unit (501) is oriented in said longitudinal direction.

3. The oil separator (1) of claim 1 or 2, comprising a first additional filtering unit (502A) and a second additional filtering unit (502B), positioned at opposite ends of the main filtering unit (501), upstream the main filtering unit (501), wherein each one of said first and a second additional filtering unit (502A, 502B) is arranged to receive a respective one of a first and a second portion of said flow from the inlet.

4. The oil separator (1) of claim 2, wherein the main filtering unit (501) occupies a filtering area which is larger than any transversal cross section of the casing (1).

5. The oil separator (1) of any of the preceding claims, wherein the main filtering unit (501) is oriented in said longitudinal direction, and wherein the oil separator (1) comprises a conveying unit (8), defining a plurality of apertures (801) and arranged in the casing (2) between the main filtering unit (501) and the outlet (4), so that said mixture has to pass through the conveying unit (8), in its flow downstream the main filtering unit (501) towards the outlet (4).

6. The oil separator (1) of claim 5, wherein the conveying unit (8) extends in the longitudinal direction to face the main filtering unit (501), which also extends in the longitudinal direction.

7. The oil separator (1) of any of the preceding claims, wherein the outlet (4) is located closer to the first transverse wall (202A), than to the second transverse wall (202B).

8. The oil separator (1) of any of the preceding claims, wherein said at least an additional filtering unit (502) is oriented transversally to said longitudinal direction.

9. A temperature conditioning system, having a refrigerant circuit (100) which comprises:
- a compressor (101), for compressing a refrigerant fluid;
- an oil separator (1), for separating oil from a mixture discharged from the compressor (101), said mixture including said refrigerant fluid and said oil,
- a condenser (102) for condensing the refrigerant fluid;
- an expansion valve (103) for expanding the refrigerant fluid;
- an evaporator (104) for evaporating the refrigerant fluid,
wherein the compressor (101), the oil separator (1), the condenser (102), the expansion valve (103) and the evaporator (104) are connected in this order, and wherein the oil separator (1) is according to any of the preceding claims.

10. The temperature conditioning system of claim 10, wherein the condenser (102) and the oil separator (1) are positioned in single casing (2) and are separated by a separation wall (201).

11. A method for separating oil from a refrigerant fluid in a temperature conditioning system, comprising the following steps:
- conveying a flow of a mixture of oil and refrigerant fluid from an inlet (3) to an outlet (4), in a first volume which is elongate in a longitudinal direction;
- passing said flow of said mixture through a main filtering area, for separating the oil from the refrigerant fluid,
wherein said main filtering area is larger than the area of any transversal cross section of said first volume and is positioned downstream to at least one additional filtering area, with respect to a path of said mixture flow from the inlet to the outlet, the method being **characterized in that** the mixture flow is bifurcated, so that a first flow portion and a second flow portion are directed with opposite orientations, along the longitudinal direction.

12. The method of claim 11, wherein mixture flow is conveyed through a duct, which has a first end connected to the inlet (3), to receive the mixture flow, and a second end and a third end, oriented opposite one another along the longitudinal direction, to direct said first and second flow portion with opposite orientations along the longitudinal direction.

13. The method of claim 11 or 12, wherein each one if said first and a second flow portions of the mixture flow is passed through a respective one of a first and second additional filtering area.

14. The oil separator of any of the claims from 1 to 8, or the temperature conditioning system of any of the claims from 9 to 10, or the method of any of the claims from 11 to 13, wherein the refrigerant fluid is a hydrofluoroolefin (HFO).

## Patentansprüche

1. Ölabscheider (1) zum Abscheiden eines Kältemittels aus Öl in einem Temperaturkonditionierungssystem, wobei der Ölabscheider (1) Folgendes umfasst:
- ein Gehäuse (2) aufweisend einen Einlass (3) zum Aufnehmen eines Gemisches aus Öl und Kältemittel und einen Auslass (4), so dass ein Strom des Gemisches vom Einlass (3) zum Auslass (4) strömen kann, wobei das Gehäuse (2) in einer Längsrichtung länglich ist;
- eine Hauptfiltereinheit (501), die innerhalb des Gehäuses (2) angeordnet ist, um das Gemisch abzufangen, und ausgelegt ist, um das Öl vom Kältemittel abzuscheiden;
- mindestens eine zusätzliche Filtereinheit (502), die in Bezug auf die Hauptfiltereinheit (501) in Reihe angeordnet ist, um den Strom des Gemisches abzufangen, wobei die Hauptfiltereinheit (501) eine Filterfläche einnimmt, die größer ist als die Fläche, die von der mindestens einen zusätzlichen Filtereinheit (502) eingenommen ist, und stromabwärts von der mindestens einen zusätzlichen Filtereinheit (502) in Bezug auf einen Pfad des Gemischstroms vom Einlass (3) zum Auslass (4) positioniert ist,
wobei der Ölabscheider (1) **dadurch gekennzeichnet ist, dass** er einen Kanal (6) umfasst, wobei der Kanal (6) innerhalb des Gehäuses (2) angeordnet ist und ein erstes Ende (601), das mit dem Einlass (3) verbunden ist, um den Gemischstrom aufzunehmen, und ein zweites und ein drittes Ende (602, 603) aufweist, die einander entlang der Längsrichtung gegenüberliegend orientiert sind, um einen ersten und einen zweiten Anteil des Stroms jeweils zu einer ersten und zweiten Querwand (202A, 202B) des Gehäuses (2) zu lenken.

2. Ölabscheider (1) nach Anspruch 1, wobei die Hauptfiltereinheit (501) in der Längsrichtung orientiert ist.

3. Ölabscheider (1) nach Anspruch 1 oder 2, umfassend eine erste zusätzliche Filtereinheit (502A) und eine zweite zusätzliche Filtereinheit (502B), die an gegenüberliegenden Enden der Hauptfiltereinheit (501) stromaufwärts der Hauptfiltereinheit (501) positioniert sind, wobei eine jede der ersten und zweiten zusätzlichen Filtereinheit (502A, 502B) angeordnet ist, um einen jeweiligen ersten und zweiten Anteil des Stroms vom Einlass aufzunehmen.

4. Ölabscheider (1) nach Anspruch 2, wobei die Hauptfiltereinheit (501) eine Filterfläche einnimmt, die größer als ein jeder transversale Querschnitt des Gehäuses (1) ist.

5. Ölabscheider (1) nach einem der vorhergehenden Ansprüche, wobei die Hauptfiltereinheit (501) in der Längsrichtung orientiert ist, und wobei der Ölabscheider (1) eine Fördereinheit (8) umfasst, die eine Vielzahl von Öffnungen (801) definiert und im Gehäuse (2) zwischen der Hauptfiltereinheit (501) und dem Auslass (4) angeordnet ist, so dass das Gemisch durch die Fördereinheit (8) in dessen Strom stromabwärts der Hauptfiltereinheit (501) in Richtung des Auslasses (4) passieren muss.

6. Ölabscheider (1) nach Anspruch 5, wobei sich die Fördereinheit (8) in der Längsrichtung erstreckt, um der Hauptfiltereinheit (501) zugewandt zu sein, die sich auch in der Längsrichtung erstreckt.

7. Ölabscheider (1) nach einem der vorhergehenden Ansprüche, wobei der Auslass (4) näher an der ersten Querwand (202A) als an der zweiten Querwand (202B) angeordnet ist.

8. Ölabscheider (1) nach einem der vorhergehenden Ansprüche, wobei die mindestens eine zusätzliche Filtereinheit (502) quer zur Längsrichtung orientiert ist.

9. Temperaturkonditionierungssystem, aufweisend einen Kältemittelkreislauf (100), der Folgendes umfasst:
- einen Verdichter (101) zum Verdichten eines Kältemittels;
- einen Ölabscheider (1) zum Abscheiden von Öl aus einem aus dem Verdichter (101) abgegebenen Gemisch, wobei das Gemisch das Kältemittel und das Öl beinhaltet,
- einen Verflüssiger (102) zum Verflüssigen des Kältemittels;
- ein Expansionsventil (103) zum Expandieren des Kältemittels;
- einen Verdampfer (104) zum Verdampfen des Kältemittels,
wobei der Verdichter (101), der Ölabscheider (1), der Verflüssiger (102), das Expansionsventil (103) und der Verdampfer (104) in dieser Reihenfolge verbunden sind, und wobei der Ölabscheider (1) nach einem der vorhergehenden Ansprüche ist.

10. Temperaturkonditionierungssystem nach Anspruch 10, wobei der Verflüssiger (102) und der Ölabscheider (1) in einem einzigen Gehäuse (2) angeordnet sind und durch eine Trennwand (201) getrennt sind.

11. Verfahren zum Abscheiden von Öl aus einem Kältemittel in einem Temperaturkonditionierungssystem, umfassend die folgenden Schritte:
- Fördern eines Stroms eines Gemisches aus Öl und Kältemittel von einem Einlass (3) zu einem Auslass (4) in einem ersten Volumen, das in einer Längsrichtung länglich ist;
- Passieren des Stroms des Gemisches durch eine Hauptfilterfläche, um das Öl vom Kältemittel abzuscheiden,
wobei die Hauptfilterfläche größer als die Fläche eines beliebigen transversalen Querschnitts des ersten Volumens ist und stromabwärts von mindestens einer zusätzlichen Filterfläche in Bezug auf einen Pfad des Gemischstroms vom Einlass zum Auslass positioniert ist, wobei das Verfahren **dadurch gekennzeichnet ist, dass** der Gemischstrom gegabelt ist, so dass ein erster Stromanteil und ein zweiter Stromanteil mit entgegengesetzten Orientierungen entlang der Längsrichtung gelenkt werden.

12. Verfahren nach Anspruch 11, wobei der Gemischstrom durch einen Kanal gefördert wird, der ein erstes Ende, das mit dem Einlass (3) verbunden ist, um den Gemischstrom aufzunehmen, und ein zweites Ende und ein drittes Ende aufweist, die einander entlang der Längsrichtung gegenüberliegend orientiert sind, um den ersten und zweiten Stromanteil mit entgegengesetzten Orientierungen entlang der Längsrichtung zu lenken.

13. Verfahren nach Anspruch 11 oder 12, wobei ein jeder des ersten und zweiten Stromanteils des Gemischstroms jeweils durch einen zwischen einer ersten und zweiten zusätzlichen Filterfläche passiert wird.

14. Ölabscheider nach einem der Ansprüche 1 bis 8 oder Temperaturkonditionierungssystem nach einem der Ansprüche 9 bis 10 oder Verfahren nach einem der Ansprüche 11 bis 13, wobei das Kältemittel ein Hydrofluorolefin (HFO) ist.

## Revendications

1. Séparateur d'huile (1) destiné à séparer un fluide frigorigène de l'huile dans un système de conditionnement de température, dans lequel le séparateur d'huile (1) comprend :
- une enveloppe (2) comportant une entrée (3), servant à recevoir un mélange d'huile et de fluide frigorigène, et une sortie (4), de sorte qu'un flux dudit mélange peut passer de l'entrée (3) à la sortie (4), l'enveloppe (2) étant allongée dans une direction longitudinale ;
- une unité de filtrage (501) principale, disposée à l'intérieur de l'enveloppe (2) pour intercepter ledit mélange, et configurée pour séparer l'huile du fluide frigorigène ;
- au moins une unité de filtrage (502) supplémentaire, disposée en série par rapport à l'unité de filtrage (501) principale, pour intercepter ledit flux du mélange, dans lequel l'unité de filtrage (501) principale occupe une zone de filtrage étant plus grande que la zone occupée par ladite au moins une unité de filtrage (502) supplémentaire et est positionnée en aval de ladite au moins une unité de filtrage (502) supplémentaire, par rapport à un trajet dudit flux de mélange de l'entrée (3) à la sortie (4),
dans lequel le séparateur d'huile (1) est **caractérisé en ce qu'**il comprend un conduit (6), le conduit (6) étant disposé à l'intérieur de l'enveloppe (2) et comportant une première extrémité (601), reliée à l'entrée (3), pour recevoir le flux de mélange, et une deuxième et une troisième extrémité (602, 603), orientées à l'opposé l'une de l'autre le long de la direction longitudinale, pour diriger une première et une deuxième partie dudit flux vers, respectivement, une première et une deuxième paroi transversale (202A, 202B) de l'enveloppe (2).

2. Séparateur d'huile (1) selon la revendication 1, dans lequel l'unité de filtrage (501) principale est orientée dans ladite direction longitudinale.

3. Séparateur d'huile (1) selon la revendication 1 ou 2, comprenant une première unité de filtrage (502A) supplémentaire et une seconde unité de filtrage (502B) supplémentaire, positionnées à des extrémités opposées de l'unité de filtrage (501) principale, en amont de l'unité de filtrage (501) principale, dans lequel chacune desdites première et seconde unités de filtrage (502A, 502B) supplémentaires est disposée pour recevoir une partie respective d'une première et d'une seconde partie dudit flux provenant de l'entrée.

4. Séparateur d'huile (1) selon la revendication 2, dans lequel l'unité de filtrage (501) principale occupe une zone de filtrage qui est plus grande que toute section transversale de l'enveloppe (1).

5. Séparateur d'huile (1) selon l'une quelconque des revendications précédentes, dans lequel l'unité de filtrage (501) principale est orientée dans ladite direction longitudinale, et dans lequel le séparateur d'huile (1) comprend une unité d'acheminement (8), définissant une pluralité d'ouvertures (801) et disposée dans l'enveloppe (2) entre l'unité de filtrage (501) principale et la sortie (4), de sorte que ledit mélange doit passer à travers l'unité d'acheminement (8), dans son flux en aval de l'unité de filtrage (501) principale vers la sortie (4).

6. Séparateur d'huile (1) selon la revendication 5, dans lequel l'unité d'acheminement (8) se prolonge dans la direction longitudinale pour faire face à l'unité de filtrage (501) principale qui se prolonge également dans la direction longitudinale.

7. Séparateur d'huile (1) selon l'une quelconque des revendications précédentes, dans lequel la sortie (4) est située plus près de la première paroi transversale (202A), que de la deuxième paroi transversale (202B).

8. Séparateur d'huile (1) selon l'une quelconque des revendications précédentes, dans lequel ladite au moins une unité de filtrage (502) supplémentaire est orientée transversalement à ladite direction longitudinale.

9. Système de conditionnement de température, comportant un circuit frigorifique (100) comprenant :
- un compresseur (101) pour comprimer un fluide frigorigène ;
- un séparateur d'huile (1) servant à séparer l'huile d'un mélange déchargé du compresseur (101), ledit mélange incluant ledit fluide frigorigène et ladite huile,
- un condenseur (102) pour condenser le fluide frigorigène ;
- un détendeur (103) pour détendre le fluide frigorigène ;
- un évaporateur (104) pour évaporer le fluide frigorigène,
dans lequel le compresseur (101), le séparateur d'huile (1), le condenseur (102), le détendeur (103) et l'évaporateur (104) sont reliés dans cet ordre,
et dans lequel le séparateur d'huile (1) se présente selon l'une quelconque des revendications précédentes.

10. Système de conditionnement de température selon la revendication 10, dans lequel le condenseur (102) et le séparateur d'huile (1) sont positionnés dans une enveloppe unique (2) et sont séparés par une paroi de séparation (201).

11. Procédé de séparation de l'huile d'un fluide frigorigène dans un système de conditionnement de température, comprenant les étapes suivantes :
- acheminer un flux d'un mélange d'huile et de fluide frigorigène d'une entrée (3) à une sortie (4), dans un premier volume étant allongé dans une direction longitudinale ;
- faire passer ledit flux dudit mélange à travers une zone de filtrage principale, pour séparer l'huile du fluide frigorigène,
dans lequel ladite zone de filtrage principale est plus grande que la zone de toute section transversale dudit premier volume et est positionnée en aval d'au moins une zone de filtrage supplémentaire, par rapport à un trajet dudit flux de mélange de l'entrée à la sortie, le procédé étant **caractérisé en ce que** le flux de mélange est bifurqué, de sorte qu'une première partie du flux et une seconde partie du flux sont dirigées avec des orientations opposées, le long de la direction longitudinale.

12. Procédé selon la revendication 11, dans lequel flux de mélange est acheminé à travers un conduit, qui comporte une première extrémité reliée à l'entrée (3), pour recevoir le flux de mélange, et une deuxième extrémité et une troisième extrémité, orientées à l'opposé l'une de l'autre le long de la direction longitudinale, pour diriger lesdites première et deuxième parties de flux avec des orientations opposées le long de la direction longitudinale.

13. Procédé selon la revendication 11 ou 12, dans lequel chacune desdites première et deuxième parties de flux du flux de mélange est passée à travers une zone respective parmi une première et une deuxième zone de filtrage supplémentaire.

14. Séparateur d'huile selon l'une quelconque des revendications 1 à 8, ou système de conditionnement de température selon l'une quelconque des revendications 9 à 10, ou procédé selon l'une quelconque des revendications 11 à 13, dans lequel le fluide frigorigène est une hydrofluoroléfine (HFO).
